# EUROPEAN PATENT APPLICATION

(11) **EP 4 223 863 A1**
(43) Date of publication of application: **09.08.2023**
(21) Application number: 23154561.7
(22) Date of filing: 01.02.2023
(51) Int. Cl.: C11D 3/43, C11D 7/50, C11D 17/04

(54) **METHODS OF REMOVING ANTIMICROBIAL RESIDUES FROM SURFACES**

(30) Priority: 02.02.2022 US 202263267461 P
(71) Applicant: Kraton Polymers Nederland B.V., 1322 CE Almere (NL)
(72) Inventor: KRUTZER, Bert, Houston, Texas 77084 (US); PEDDINTI, Bharadwaja, Houston, Texas 77084 (US); YAN, Jiaqi, Houston, Texas 77084 (US); WRIGHT, Kathryn J., Houston, Texas 77084 (US); SMITH, James, Houston, Texas 77084 (US)
(74) Representative: Henkel & Partner mbB

(57) **Abstract**

A method is provided for removing a residue from a surface. The method includes steps of applying a cleaning medium to the surface containing the residue. The cleaning medium comprises up to 100 wt.% of at least a solvent. Allowing the cleaning medium to be in contact with the residue for at least 5 seconds to swell / dissolve the residue for removing the residue from the surface. At least 50 wt.% of the residue and the cleaning medium are removed from the surface by wiping the surface with a shear force. The residue contains a sulfonated polymer having an ion exchange capacity (IEC) of greater than 0.5 meq/g. The sulfonated polymer can kill > 90% of microbes coming in contact with the sulfonated polymer in less than 30 min.

## Description

### TECHNICAL FIELD

The disclosure relates to a method of removing a residue from a surface and applications thereof.

### BACKGROUND

Surfaces containing antimicrobial layers are used in many places in recent years, particularly, surfaces which are exposed to frequent human touch. The surfaces with antimicrobial surface coating include touchscreens, handrails, doorknobs, handles, faucets, automotive and aircraft interiors, luggage and handbags, bank cards and card readers, wallets, keys, counters and containers, commonly shared items such as pens, and hospital items, among many others.

The antimicrobial coating layer is not expected to remain active throughout the life of the surface, due to the frequent human touch and environmental conditions. Thus, removal of the existing antimicrobial residue for re-deposition or recoating with new layer is often needed. The removal of the residue is time consuming, expensive, inefficient and can require large amount of petroleum based solvents. In instances, the removal of the residue from the surface can be harmful and / or damage surfaces.

Therefore, there is a need to provide an improved method offering easier removal of the residue from the surface.

### SUMMARY

In one aspect, a method to remove at least a portion of a residue from a surface, the method comprising, consisting essentially of, or consists of applying a cleaning medium to the surface containing the residue. The cleaning medium comprises up to 100 wt.% of at least a solvent selected from the group consisting of organic solvents, inorganic solvents, terpene based compounds, decarboxylated rosin acids (DCRs), and mixtures thereof, based on total weight of the cleaning medium. The residue contains a sulfonated polymer having an ion exchange capacity (IEC) of greater than 0.5 meq/g. The residue is a coating resulting from deposition of the sulfonated polymer to provide antimicrobial protection to the surface. Allowing the cleaning medium to be in contact with the residue for at least 5 seconds to swell and / or dissolve the residue to remove the residue from the surface. Removing at least 50 wt.% of the residue and the cleaning medium from the surface by wiping the surface with a shear force.

In a second aspect, the sulfonated polymer is sufficiently sulfonated for a reduction in a microbe concentration by at least 1 log₁₀ CFU (colony forming units) within 120 min upon contact with the coating after being first deposited onto the surface.

In a third aspect, the sulfonated polymer is sufficiently sulfonated to have least 10 mol% of sulfonic acid or sulfonate ester functional groups based on total mol of monomer units or polymer blocks to be sulfonated in the sulfonated polymer.

In a fourth aspect, the sulfonated polymer has a degree of sulfonation of 10 to 100 mol%.

### DRAWINGS

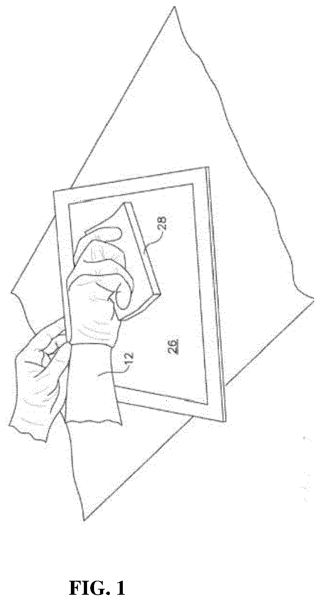

FIG. 1 is an illustration of removal of a residue from a surface (26) by using a wipe (28) containing a cleaning medium.

### DESCRIPTION

The following terms used in the specification have the following meanings:
"At least one of [a group such as A, B, and C]" or "any of [a group such as A, B, and C]" means a single member from the group, more than one member from the group, or a combination of members from the group. For example, at least one of A, B, and C includes, for example, A only, B only, or C only, as well as A and B, A and C, B and C; or A, B, and C, or any other all combinations of A, B, and C. In another example, at least one of A and means A only, B only, as well as A and B. A list of embodiments presented as "A, B, or C" is to be interpreted as including the embodiments, A only, B only, C only, "A or B," "A or C," "B or C," or "A, B, or C."

"Surface" refers to an outside part or uppermost layer or external aspect of something (an object or a body). The surface also refers to a continuous set of points that has length and breadth but with or without thickness. The surface is available to deposit or coat a material of the choice.

"Effective amount" refers to an amount sufficient to alter, destroy, inactivate, neutralize and / or inhibit growth of microorganisms, e.g., an amount sufficient to sterilize and kill microorganisms in contact with the antimicrobial layer applied to a surface.

"Residue" refers to a material left after the main part has been removed, or gone, or been taken away, or disposed of during the intended use of the material. Residue includes a sulfonated polymer which acts as an antimicrobial agent for killing 99% microbes.

"Ion Exchange Capacity" or IEC refers to the total active sites or functional groups responsible for ion exchange in a polymer. Generally, a conventional acid-base titration method is used to determine the IEC, see for example International Journal of Hydrogen Energy, Volume 39, Issue 10, March 26, 2014, Pages 5054-5062, "Determination of the ion exchange capacity of anion-selective membrane." IEC is the inverse of "equivalent weight" or EW, which the weight of the polymer required to provide 1 mole of exchangeable protons.

"Cleaning medium" refers to an object in the form of liquid, gel, or foam, which helps in cleaning or removing contents from the surface which are intended to clean or remove.

"Dissolve" refers to partially or fully dissolve a sulfonated polymer in a solvent. Partially dissolve means > 40% and < 100% of the sulfonated polymer is dissolved in the solvent, or 50 - 99%, or 60 - 95%, or > 70%. Fully dissolved means 100% of the sulfonated polymer is dissolved in the solvent.

"Swell" refers to an increase in the volume of a material connected with the uptake of a liquid.

"Solubility Parameter" or (δ) of a solvent or polymer, refers to the square root of the vaporization energy (ΔE) divided by its molar volume (V), as in the equation δ = (ΔE/V)^{1/2}. The more similar the solubility parameters of two substances, the higher will be the solubility between them and hence the expression "like dissolves like." Hansen established that the solubility parameter of a solvent or polymer is the result of the contribution of three types of interactions: dispersion forces (δ_{D}²), polar interactions (δ_{P}²) and hydrogen bonds (δ_{H}²) (Hansen, 2007; Hansen, 1967), with the total solubility (Hildebrand) parameter δT as the result of contribution of each of the three Hansen solubility parameters (HSP) according to: δ_{T} = (δ²_{D} + δ²_{P} + δ²_{H} )^{½}.

"Susceptible to sulfonation" refers to a polymer, polymer block, compound, monomer, oligomer, etc., being predisposed, or sensitive, or capable of reaction with sulfur containing compound, e.g., SO₃, H₂SO₄, etc., under conditions conventionally employed for sulfonation, wherein sulfonation is very likely to occur to obtain a sulfonated product. In embodiments, a polymer block "susceptible to sulfonation" upon sulfonation, the degree of sulfonation is at least 10 mol%, or at least 20 mol%, or at least 30, or at least 50 mol%, or at least 75 mol%, of the total polymer block, for the polymer block to have at least 10 mol%, or at least 20 mol%, or at least 30, or at least 50 mol%, or at least 75 mol% sulfonic acid or sulfonate ester functional groups.

"Resistant to sulfonation" means having little if any sulfonation of the respective block under conditions conventionally employed for sulfonation, with < 10 mol%, or < 8 mol%, or < 5 mol% sulfonic acid or sulfonate ester functional groups in the polymer block.

"Molecular weight" or M_{w} refers to the polystyrene equivalent molecular weight in g/mol of a polymer block or a block copolymer. M_{w} can be measured with gel permeation chromatography (GPC) using polystyrene calibration standards, such as is done according to ASTM 5296-19. The GPC detector can be an ultraviolet or refractive index detector or a combination thereof. The chromatograph is calibrated using commercially available polystyrene molecular weight standards. M_{w} of polymers measured using GPC so calibrated are polystyrene equivalent molecular weights or apparent molecular weights. M_{w} expressed herein is measured at the peak of the GPC trace and are commonly referred to as polystyrene equivalent "peak molecular weight," designated as Mₚ.

The disclosure relates to a method of removing a residue, e.g., a sulfonated polymer, from a surface by applying a cleaning medium containing at least one solvent which swells or dissolves the residue, for subsequent removal from the surface by wiping with a shear force. The cleaning medium is used in an effective amount to remove the residue from the surface.

### (Cleaning Medium)

The cleaning medium can be in any of liquid, gel, or foam form, and comprising at least one solvent selected from the group consisting of organic solvents, inorganic solvents, terpene-based solvents, decarboxylated rosin acids (DCRs), and mixtures thereof. In embodiments, the cleaning medium when applied to the surface containing the residue, softens (by swelling) or dissolves the residue on the surface, for subsequent removal or scrubbing away.

In embodiments, the solvent is an organic solvent selected from acetone, acetyl acetone, acetic acid, acetonitrile, benzonitrile, 2-butanone, t-butyl alcohol, benzyl alcohol, cyclohexane, cyclohexanol, cyclohexanone, dichloromethane, 1,2-dichloroethane, diethylene glycol, diethyl ether, diglyme (diethylene glycol dimethyl ether), 1,2-dimethoxy-ethane (glyme, DME), 1,4-dioxane, methanol, ethanol, 2-ethoxyethanol, 2-propanone, 1,2-propanediol, methyl acetate, ethyl acetate, ethyl acetoacetate, butyl acetate, ethylene glycol, glycerin, heptane, hexamethylphosphoramide (HMPA), hexamethylphosphoroustriamide (HMPT), hexane, methyl t-butyl ether (MTBE), dimethylsulfoxide (DMSO), methyl ethyl ketone (MEK), dimethylformamide (DMF), methyl propyl ketone (MPK), dimethylphthalate, nitromethane, pentane, petroleum ether, pyridine, toluene, aniline, triethyl amine, diethylamine, N,N-dimethylacetamide, o-xylene, m-xylene, p-xylene, naphtha, di-n-butylphthalate, 3-pentanone, chloroform, bis(2-methoxyethyl) ether, ethyl benzoate, tetrahydrofuran(THF), anisole, chlorobenzene, N,N-dimethylaniline, carbon disulfide, carbon tetrachloride, ethylene glycol mono hexyl ether (EGMHE), 1-undecanol, 1-pentanol, tert-butyl methyl ether, 2-ethyl butyl acetate, butyl lactate, N-dodecane, butanol, ethyl lactate, 1-decanol, isopropyl myristate, 1-propanol, 2-propanol, isododecane, ethyl acetate, methyl sulfate, dimethyl sulfate, cresol, creosol, decanal, ethyl glycol acetate, 2-ethyl hexanoic acid, neopentyl glycol, and mixtures thereof. In embodiments, the organic solvent is selected from the group of C₁ - C₆ alkanols, C₁ - C₆ diols, C₁ - C₆ alkyl ethers of alkylene glycols and polyalkylene glycols, and mixtures thereof.

In embodiments, the solvent is an inorganic solvent selected from water, ammonia, and mixtures thereof.

In embodiments, the solvent is a terpene based compound selected from d-limonene, alpha-pinene, beta-pinene, 1-methyl-4-isopropylene-1-cyclohexane, and mixtures thereof.

In embodiments, the solvent is a decarboxylated rosin acid (DCR) in the form of a liquid, which is either a crude DCR, a distilled or purified DCR (> 90% purity), or mixtures thereof, as disclosed in US Patent Publication No. US20220195326A1.

In embodiments, the solvent has a relative polarity of 0.005 - 0.65, or 0.006 - 0.64, or 0.007 - 0.63, or 0.008 - 0.62, or 0.009 - 0.61.

In embodiments, each solvent is characterized to have at least one of an OH group, an ester and / or ether group, or 10 or more carbon atoms.

In embodiments, the cleaning medium comprises a solvent system containing a mixture of two solvents different from each other, in a weight ratio of 10:90 to 90:10, or 20:80 to 80:20, or 70:30 to 30:70, or 60:40 to 40:60. Examples of pair of solvents include: ethyl acetate and 1-propanol, tert-butyl methyl ether and 1-propanol, 2-ethyl butyl acetate and 1-propanol, butyl lactate and butanol, 1-decanol and butanol, 1-undecanol and isopropyl myristate, 1-propanol and isopropyl myristate, decanal and isopropyl myristate, 1-undecanol and butanol, 2-ethyl butyl acetate and 1-propanol, ethyl lactate and butanol, isododecane and butanol, decanal and butanol, 1-undecanol and isododecane, decanal and isododecane, n-dodecane and butanol, ethyl glycol acetate and 1-propanol, ethyl glycol acetate and butanol, 1-pentanol and isopropyl myristate, 1-undecanol and 1-pentanol, 2-ethyl hexanoic acid and ethyl acetate, EGMHE and 1-propanol, EGMHE and butanol, EGMHE and ethyl lactate, EGMHE and ethyl glycol acetate, EGMHE and 1-pentanol, EGMHE and 1-decanol, EGMHE and isododecane, EGMHE and decanal, isododecane and 1-pentanol, 2-ethyl hexanoic acid and EGMHE, 2-ethyl hexanoic acid and ethyl acetate, EGMHE and ethanol, isododecane and ethanol, ethyl glycol acetate and ethanol, and neopentyl glycol and ethanol.

In embodiments, the cleaning medium comprises a solvent system containing a mixture of two or more solvents. The solvent system has HSP (Hildebrand Solubility Parameter) δD ranging from 15 - 16, or 15.05 - 15.90, or 15.10 - 15.80, or 15.15 - 15.70, or 15.20 - 15.60, or 15.25 - 15.55, a δP ranging from 1 - 7, or 1.2 - 6.8, or 1.4 - 6.5, or 1.5 - 6.0, or 1.6 - 5.6; and a δH ranging from 2 - 9, or 2.1 - 8.5, or 2.2 - 8.0, or 2.2 - 7.5, or 2.3 - 7, or 2.4 - 6.8.

In embodiments, the cleaning medium containing a single solvent, or a mixture of solvents, with each solvent independently having a δD of 15 - 16, or 15.05 - 15.90, or 15.10 - 15.80, or 15.15 - 15.70, or 15.20 - 15.60, or 15.25 - 15.55; a δP of 1 - 7, or 1.2 - 6.8, or 1.4 - 6.5, or 1.5 - 6.0, or 1.6 - 5.6; and a δH of 2 - 9, or 2.1 - 8.5, or 2.2 - 8.0, or 2.2 - 7.5, or 2.3 - 7, or 2.4 - 6.8.

In embodiments, the cleaning medium comprises a solvent system having a total solubility parameter (*δ_{T}*) of > 14.5, or > 15, or > 15.5, or 15 - 19, or 15.2 - 18.8, or 15.5 - 18.6, or 15.7 - 18.5, or 15.8-18.2.

In embodiments, the cleaning medium comprises the solvent in an amount of up to 100 wt.%, or > 95, or > 90, or 85, or 80, or 90 - 99, or 95 - 99 wt.%, based on total weight of the cleaning medium.

In embodiments, if the solvent is not water itself, the solvent system can be further diluted with water for an aqueous system, at a weight ratio of the solvent system to water ranging from 10:90 to 90: 10, or 20:80 to 80:20, or 70:30 to 30:70, or 60:40 to 40:60, for a viscosity of < 500 centipoise (cps), or < 200 cps, or < 100 cps, or < 50 cps. The lower viscosity solvent formulation allows the antimicrobial composition to wick quickly into a stack of dry precut wipes, for the antimicrobial composition to subsequently transfer from the wipe substrate to the surface intended to be contacted / coated with the antimicrobial composition (for a coating layer).

In embodiments, the cleaning medium further comprises at least an additive selected from the group consisting of propellant, stabilizers, surfactant, detackifying agent, natural oil, detectable compound (e.g., color indicators, pH indicators, etc.), neutralizing agents, thickeners, color change pH indicators, other resins, viscosity modifiers, wetting agents, deaerators, colorants, flow modifiers, drip retardants, antistatic agents, processing aids, stress-relief additives, fragrances, luminescent additives, such as phosphorescent and fluorescence, and mixtures thereof.

Examples of surfactant include 4-(5-dodecyl)benzenesulfonate, docusate (dioctyl sodium sulfosuccinate), alkyl ether phosphates, benzalkaonium chloride (BAC), perfluorooctanesulfonate (PFOS), and the like.

Examples detackifying agent contain compounds containing polyvalent metal, e.g., molybdenum, zirconium, magnesium, calcium, strontium, barium, titanium, tin, iron, cobalt, nickel, copper, zinc, chromium, and lead; and strongly basic amines such as ethylene diamine, and triethylene tetramine. Polyvalent metal containing compounds can be inorganic, e.g., cobalt chloride, zinc oxide, etc., or organometallic, e.g., cobalt octoate, zinc hexogen, zirconium naphthanate, etc.

The natural oil can be selected from coconut oil, olive oil, sunflower seed oil, jojoba oil, almond oil, grapeseed oil, rose hip seed oil, and mixtures thereof.

In embodiments, the additive is present in amounts of 1 - 10, or 2 - 10, or 1 - 5, wt.%, based on total weight of the cleaning medium.

### (Residue)

The residue refers to a layer(s) (or coating) resulting from deposition of a sulfonated polymer, after the main part of the coating has been in use for a while or being worn out, not providing intended antimicrobial protection effect in comparison with initial deposition of the sulfonated polymer on the surface.

Sulfonated polymer herein refers to antimicrobial polymers selected from the group consisting of perfluorosulfonic acid polymers (e.g., sulfonated tetrafluoroethylene based fluoropolymer-copolymer), sulfonated polyolefins, sulfonated polyimides, sulfonated styrenic block copolymers, sulfonated polyamides, sulfonated polyester, polystyrene sulfonates, sulfonated polysulfones such as polyether sulfone, sulfonated polyketones such as polyether ether ketone, sulfonated polyphenylene ethers, and mixtures thereof.

Sulfonated polymers refer to polymers that are capable of killing > 90%, or > 95%, or > 98%, or > 99%, or > 99.9% of microbes coming in contact with the sulfonated polymer in < 30, or < 25, or < 20, or < 15, or < 10, or < 5, or < 1 min. In embodiments, the coating layer of the sulfonated polymer is found effective in destroying / inactivating at least 99.9% (3 log₁₀ CFU), or at least 99% (2 log₁₀ CFU), or at least 95%, or at least 90% (1 log₁₀ CFU) of microbes in < 30 min., or < 60 min., or < 120 min upon contact with the sulfonated polymer. In embodiments when applied as a layer / a coating, the sulfonated polymer layer remains effective for killing microbes for a long period of > 4 hrs., > 10 hrs., or > 20 hrs., or > 48 hrs., or 1 week, or > 4 weeks or > 2 months, or > 6 months. In embodiments, microbes include but are not limited to MRSA (Methicillin-resistant Staphylococcus aureus), vancomycin-resistant Enterococcus faecium, X-MulV, PI-3, SARS-CoV-2, carbapenem-resistant Acinetobacter baumannii, and influenza A virus.

In embodiments, the sulfonated polymer refers to polymers having a sulfonate group, e.g., -SO₃, either in the acid form (e.g., -SO₃H, sulfonic acid) or a salt form (e.g., - SO₃Na). The term "sulfonated polymer" also covers sulfonate containing polymers, e.g., polystyrene sulfonate.

In embodiments, the sulfonated polymer is characterized as being sufficiently sulfonated, meaning having at least 10 mol% of sulfonic acid or sulfonate ester functional groups based on total mol of the number of monomer units or polymer blocks to be sulfonated ("degree of sulfonation"). In embodiments, the sulfonated polymer has a degree of sulfonation of at least 10 mol%, or > 15, or > 20, or > 25, or > 30, or > 40, or > 50, or > 60, or > 70, or > 80, or > 90, or > 99, or 10 - 100, or 20 - 90, or 30 - 80 mol%. The degree of sulfonation can be calculated by NMR or ion exchange capacity (IEC). In embodiments, the sulfonated polymer has an ion exchange capacity (IEC) of at least 0.5, or > 0.75, or > 1.0, or > 1.5, or > 2.0, or > 2.5, or < 5.0 or 0.5 - 3.5, or 0.5 - 2.6 meq/g.

In embodiments, the sulfonated polymer is a sulfonated styrenic block copolymer (SSBC) obtained by sulfonation of a styrenic block copolymer (SBC) precursor which is any of linear, branched, or radial block copolymer having at least one end block A and at least one interior block B. The SSBC has at least a sulfonate group, e.g., -SO₃, either in an acid form (e.g., -SO₃H, sulfonic acid) or a salt form (e.g., -SO₃Na). The sulfonate group can be in the form of metal salt, ammonium salt, or amine salt.

In embodiments, the SBC precursor is prepared by anionic polymerization using techniques known in the art. Other methods, such as cationic polymerization, can also be employed. The anionic polymerization initiator is generally an organometallic compound, such as, an organolithium compound, e.g., ethyl-, propyl-, isopropyl-, n-butyl-, sec-butyl-, tert-butyl-, phenyl-, hexylbiphenyl-, hexamethylenedi-, butadieneyl-, isopreneyl-, 1,1-diphenylhexyllithium, or polystyryllithium. An amount of initiator needed is calculated based on the molecular weight to be achieved, generally from 0.002 to 5 wt.%, based on amount of monomers to be polymerized. Suitable solvent for the polymerization includes aliphatic, cycloaliphatic, or aromatic hydrocarbons having from 4 to 12 carbon atoms, such as pentane, hexane, heptane, cyclopentane, cyclohexane, methylcyclohexane, decalin, isooctane, benzene, alkylbenzenes, such as toluene, xylene or ethylbenzene, and mixtures thereof. Polymer chain termination can be achieved by quenching with a proton donor or a compound having a leaving group that can be displaced by the carbanionic polymer chain.

If desired, a Lewis base additive, which affects polymerization parameters can also be employed. Examples of Lewis bases include dimethyl ether, diethyl ether, ethylene glycol dimethyl ether, 1,2-diethoxypropane, diethylene glycol dimethyl ether, tetrahydrofuran, tetrahydrofurfuryl ethers, such as tetrahydrofurfuryl methyl ether, and tertiary amines. The additives can influence the extent of 1,2-addition of the conjugated diene, and therefore the vinyl group content in the respective block.

In embodiments, the SBC precursor has a general configuration of: A-B-A, (A-B)ₙ(A), (A-B-A)ₙ, (A-B-A)ₙX, (A-B)ₙX, A-D-B, A-B-D, A-D-B-D-A, A-B-D-B-A, (A-D-B)ₙA, (A-B-D)ₙA (A-D-B)ₙX, (A-B-D)ₙX, (A-D-B-D-A)ₙX, (A-B-D-B-A)ₙX or mixtures thereof; where n is an integer from 2 to 30; and X is a residue of a coupling agent. Each block A and D is resistant to sulfonation, and each block B is susceptible to sulfonation.

In embodiments, the coupling agent X includes bi- or polyfunctional compounds, for example divinylbenzene, halides of aliphatic or araliphatic hydrocarbons, such as 1,2-dibromoethane, bis(chloromethyl)benzene, or silicon tetrachloride, dialkyl- or diarylsilicon dichloride, alkyl- or arylsilicon trichloride, tin tetrachloride, alkylsilicon methoxides, alkyl silicon ethoxides, polyfunctional aldehydes, such as terephthalic dialdehyde, ketones, esters, anhydrides, or epoxides. In embodiments, the coupling agent is selected from methyltrimethoxysilane (MTMS), methyltriethoxysilane (MTES), tetramethoxysilane (TMOS), dimethyladipate, gamma-glycidoxypropyltrimethoxy silane, and mixtures thereof.

In embodiments, the block A has at least one compound selected from polymerized (i) para-substituted styrene, (ii) ethylene, (iii) alpha olefins of 3 to 18 carbon atoms; (iv) 1,3-cyclodiene, (v) conjugated dienes having a vinyl content of < 35 mol% prior to hydrogenation, (vi) acrylic esters, (vii) methacrylic esters, and (viii) mixtures thereof. If the block A is a polymer of 1,3-cyclodiene or conjugated diene monomer, the block A will be hydrogenated subsequent to preparation of the SBC and before sulfonation of the SBC precursor. In embodiments, the block A contains up to 15 wt.% of vinyl aromatic monomers such as those present in the block B.

In embodiments, the block A is derived from polymerized para-substituted styrene monomers selected from the group consisting of para-methylstyrene, para-ethylstyrene, para-n-propylstyrene, para-iso-propylstyrene, para-n-butylstyrene, para-sec-butylstyrene, para-iso-butylstyrene, para-t-butylstyrene, isomers of para-decylstyrene, isomers of para-dodecylstyrene, and mixtures thereof.

In embodiments, the block B is derived from polymerized vinyl aromatic monomers selected from the group consisting of unsubstituted styrene, ortho-substituted styrene, meta-substituted styrene, alpha-methylstyrene, 1,1-diphenylethylene, 1,2-diphenylethylene, and mixtures thereof. In embodiments, the block B has a mixture of the vinyl aromatic monomer and hydrogenated conjugated dienes, such as butadiene or isoprene, having a vinyl content, prior to hydrogenation, of 2 - 40, or 5 - 38, or 8 - 35, or 10 - 30, or > 5, or < 40 wt.%, based on total weight of polymerized conjugated diene monomers in the block B.

In embodiments, the block D is derived from a polymer or copolymer of a conjugated diene monomer selected from the group consisting of isoprene, 1,3-butadiene, 2,3-dimethyl-1,3-butadiene, 1-phenyl-1,3-butadiene, 1,3-pentadiene, 1,3-hexadiene, 3-butyl-1,3-octadiene, farnesene, myrcene, piperylene, cyclohexadiene, and mixtures thereof.

In embodiments, prior to hydrogenation and sulfonation, the block D has a vinyl content of > 80, or > 85, or > 90, or > 95, or > 98, or > 99, or > 99.5, or 50 - 95, or 60 - 90, or 70 - 95 wt.%, based on total weight of the polymerized conjugated diene monomers in the block D.

In embodiments, the block D has a hydrogenation level of 60 - 99%, or 65 - 95%, or 70 - 90%, or 75 - 99%, or > 75%, or 85%, or > 95%, or > 98%.

In embodiments, each block A and B independently has a hydrogenation level of 0 - 20%, or 2 - 18%, or 4 - 15%, or > 10%, or > 15%, or < 20%. A suitable catalyst based on nickel, cobalt or titanium can be used in the hydrogenation step.

The SBC precursor is sulfonated to provide the corresponding SSBC. Sulfonation occurs at the phenyl ring of polymerized styrene units in the block B, predominantly para to the phenyl carbon atom bonded to the polymer backbone. In embodiments, the block B has a degree of sulfonation of 10 - 100, or 15 - 95, or 20 - 90, or 25 - 85, or 30 - 80, or 35 - 75, or 40 - 70, or > 15, or < 85 mol%, based on total mol of the block B.

In embodiments, the sulfonated polymer is a midblock-sulfonated triblock copolymer, or a midblock-sulfonated pentablock copolymer, e.g., a poly(p-tert-butylstyrene-b-styrenesulfonate-b-p-tert-butylstyrene), or a poly[tert-butylstyrene-b-(ethylene-alt-propylene)-b-(styrenesulfonate)-b-(ethylene-alt-propylene)-b-tert-butylstyrene.

In embodiments, the sulfonated polymer has a Mₚ of 25 - 500, or 30 - 450, or 350 - 400, or 40 - 350, or 45 - 300, or 50 - 250, or > 35, or < 350 kg/mol.

In embodiments, the sulfonated polymer has a glass transition temperature (T_{g}) of 80 - 180°C, or 85 - 160°C, or 90 - 150°C, or 100 - 140°C, or > 90°C, or < 210°C, measured by Dynamic Mechanical Analysis (DMA), according to ASTM 4065.

The sulfonated polymer in embodiments is as disclosed in Patent Publication Nos. US9861941, US8263713, US8445631, US8012539, US8377514, US8377515, US7737224, US8383735, US7919565, US8003733, US8058353, US7981970, US8329827, US8084546, US8383735, and US10202494.

The antimicrobial and mechanical properties of the sulfonated polymer can be varied and controlled by varying the amount of sulfonation, the degree of neutralization of the sulfonic acid groups to the sulfonated salts, as well as controlling the location of the sulfonated group(s) in the polymer. In embodiments and depending on the applications, e.g., one with the need for water dispersity / solubility, or at the other spectrum, one with the need for sufficient durability with constant wiping with water based cleaners, the sulfonated polymer can be selectively sulfonated for desired water dispersity properties or mechanical properties, e.g., having the sulfonic acid functional groups attached to the inner blocks or middle blocks, or in the outer blocks of a sulfonated polymer, as described in US Patent No. US8084546. If the outer (hard) blocks are sulfonated, upon exposure to water, hydration of the hard domains may result in plasticization of those domains and softening, allowing dispersion or solubility.

Depending on the applications and the desired properties, the sulfonated polymer can be modified (or functionalized). In embodiments, the sulfonated polymer is neutralized with any of various metal counterions, including alkali, alkaline earth, and transition metals, with at least 10% of the sulfonic acid groups being neutralized. In embodiments, the sulfonated polymer is neutralized with inorganic or organic cationic salts, e.g., those based on ammonium, phosphonium, pyridinium, sulfonium, and the like. Salts can be monomeric, oligomeric, or polymeric. In embodiments, the sulfonated block copolymer is neutralized with various primary, secondary, or tertiary amine-containing molecules, with > 10% of the sulfonic acid or sulfonate ester functional groups being neutralized.

In embodiments, the monomer or the block containing amine functionality or phosphine functionality can be neutralized with acids or proton donors, creating quaternary ammonium or phosphonium salts. In other embodiments, the sulfonated polymer containing tertiary amine is reacted with alkylhalides to form functional groups, e.g., quaternized salts. In some embodiments, the sulfonated polymer can contain both cationic and anionic functionality to form so-called zwitterionic polymers.

In embodiments, the sulfonic acid or sulfonate functional group is modified by reaction with an effective amount of polyoxyalkyleneamine having molecular weights from 140 to 10,000. Amine-containing neutralizing agents can be mono-functional or multi-functional; monomeric, oligomeric, or polymeric. In alternative embodiments, the sulfonated polymer is modified with alternative anionic functionalities, such as phosphonic acid or acrylic and alkyl acrylic acids.

In embodiments, amine containing polymers are used for the modification of the sulfonated polymers, forming members of a class of materials termed coaservates. In examples, the neutralizing agent is a polymeric amine, e.g., polymers containing benzylamine functionality. Examples include homopolymers and copolymers of 4-dimethylaminostyrene which has been described in US Patent 9,849,450. In embodiments, the neutralizing agents are selected from polymers containing vinylbenzylamine functionality, e.g., polymers synthesized from poly-p-methylstyrene containing block copolymers via a bromination-amination strategy, or by direct anionic polymerization of amine containing styrenic monomers. Examples of amine functionalities for functionalization include but are not limited to p-vinylbenzyldimethylamine (BDMA), p-vinylbenzylpyrrolidine (VBPyr), p-vinylbenzyl-bis(2-methoxyethyl)amine (VBDEM), p-vinylbenzylpiperazine (VBMPip), and p-vinylbenzyldiphenylamine (VBDPA). In embodiments, corresponding phosphorus containing polymers can also be used for the functionalization of the sulfonated polymers.

Other sulfonated polymer can be selected from sulfonated polystyrene-polyisoprene-polystyrene sulfonated in the center segment, sulfonated t-butylstyrene / isoprene random copolymer with C=C sites in their backbone, sulfonated SBR (styrene butadiene rubber) as disclosed in US 6,110,616, and mixtures thereof. In embodiments, the sulfonated polymer is a water dispersible BAB triblock, with B being a hydrophobic block such as alkyl or (if it is sulfonated, it becomes hydrophilic) poly(t-butyl styrene) and A being a hydrophilic block such as sulfonated poly(vinyl toluene) as disclosed in US 4,505,827. In embodiments, the sulfonated polymer is a water-soluble polymer, a sulfonated diblock polymer of t-butyl styrene / styrene, or a sulfonated triblock polymer of t-butyl styrene -styrene - t-butyl styrene as disclosed in US 4,492,785.

In embodiments, the sulfonated polymer is a water-soluble polymer, a sulfonated diblock polymer of t-butyl styrene / styrene, or a sulfonated triblock polymer of t-butyl styrene - styrene -t-butyl styrene as disclosed in US 4,492,785.

In embodiments, the coating of sulfonated polymer further comprises at least one water soluble polymer which facilitates subsequent removal of the residue from the surface. Exemplary polymers include water soluble polymers, e.g., polyethylene glycol, ethyleneoxide/propylene oxide/ethyleneoxide block copolymers polyacrylamides, polyacrylic acid copolymer, and polyvinyl alcohol, poly((meth)acrylic acid) and its copolymers, cellulose acetate, substituted celluloses such as hydroxyethylcellulose, polysaccharides, polyvinyl pyrrolidone, xanthan gum, pectins, chitosan, dextran, carrageenan, guar gum, albumin, starch, quaternary ammonium polymers, polyvinyl methyl ether/maleic anhydride, carboxypolymethylene, arabinoxylanes, glucomannanes, gum arabic, johannistree gums, curdlan, pullulan, gelatin, dextran, sodium alginate, sodium alginate cross-linked with calcium salt, and mixtures thereof.

In embodiments, the water soluble polymer is present in an amount of 1 - 20, or 5 - 10, or > 2, < 15 wt.% of the total weight of the coating on the surface.

In embodiments, the coating of the sulfonated polymer further comprises other polymers to facilitate the removal of the residue. Examples include poly(phenylene oxide) (PPO); polystyrene (PS); poly(tert-butyl styrene) (tBS); linear styrenic block copolymer (SBS) e.g., styrene-butadiene-styrene (SBS), styrene-isoprene-styrene (SIS), styrene-ethylene/butylene-butadiene-styrene (SEBS), styrene-ethylene/propylene-styrene (SEPS); poly(para-methyl styrene); and mixtures thereof, in amounts ranging from 0.5 - 30, or 1 - 25, or 2 - 20, or 5 - 18, or 10 - 15 wt.%, based on the total weight of the coating on the surface.

In embodiments, the sulfonated polymer is deposited or coated on the surface by any suitable deposition technique known in the art, e.g., spray coating, electro-coating, electro-spinning, direct coating, transfer coating, dip coating, slot-die coating, and the like. In embodiments, the layer of the sulfonated polymer, or subsequently the residue layer to be removed, has a thickness of > 0.2 µm, or > 0.5 µm, or > 10 µm, or > 20 µm, or > 50 µm, > 500 µm, or < 1000 µm.

### (Removal of Residue)

The residue can be removed by providing the cleaning medium containing the solvent or the solvent system; applying the cleaning medium to the surface containing the residue; allowing the cleaning medium to be in contact with the surface for at least 5 seconds for removing > 50 wt.% of the residue to be removed from the surface; and removing the cleaning medium and removable residue from the surface by wiping the surface with a shear force using a wipe.

In embodiments, the cleaning medium is applied to a wipe to get the wipe saturated with the solvent, which is then used to soften or dissolve the residue, as well as for wiping the residue away from the surface. Examples of the wipe include towelette, absorbent sheet, fabric, sponge, paper, absorbent polymer, and mixtures thereof. In embodiments, the cleaning medium being applied to the wipe by impregnation, coating, immersing, dipping, sinking, drench, covering, rinsing, wetting, absorbing, and the like.

In embodiments, the cleaning medium can be applied directly to the surface containing the residue by any convenient manner, e.g., spraying, brushing, dipping, wiping, sprinkling, pouring, and the like, or cover at least 90% of the residue, or > 95%, or > 98%, or up to 100%.

The contact between the cleaning medium and the surface can be repeated, e.g., soaking, spraying, wiping, or scrubbing motion, etc., for an accumulated time of > 5 sec., > 10 sec., > 30 sec., < 10 min, < 5 min., depending on the amount of residue on the surface, the type of sulfonated polymer in the residue, and the solvent system. In embodiments, the cleaning medium is in contact with the surface for a period of 5 sec - 30 min, or 10 sec - 25 min, or 20 sec - 20 min, or 10 sec - 15 min, 20 sec - 10 min, or 1 min - 5 min, or > 0.5 sec, or < 10 min.

In embodiments, the cleaning medium when applied, dissolves the residue into a solution, or softens or causes the residue to swell, for subsequent removal, e.g., scrubbing or wiping away or washing. In embodiments, the cleaning medium causes the residue to form a detachable film or a skin that can be subsequently peeled off. In embodiments, a pressure sensitive adhesive (PSA) is applied on the surface containing the residue after application of the cleaning medium. The PSA is subsequently peeled off to remove the residue. The PSA can be based on poly(meth)acrylates or other polymers known in the art.

In embodiments, the cleaning medium and the residue are removed from the surface by any convenient manner and / or tool, e.g., wide scraping blade, wire brush, squeegee, stiff bristle brushes, plastic squeegees, low density non-woven pads such as those made of nylon and other synthetic fibers, open mesh woven cloth, screening material, and similar scrubbing or scouring materials and the like, to obtain the cleaned surface. In embodiments, a small quantity of a lubricant, e.g., oil or grease is added to the cleaning medium to reduce the drag on the cleaning tool during the removal operation.

In embodiments, the cleaning medium can be heated to a temperature of 30 - 50, or 32 - 50, or 35 - 45, or > 25, or < 45°C, before application to facilitate the removal.

In embodiments, the cleaning medium removes > 50 wt.% of the residue from the surface, or > 60, or > 70, or > 80, or > 90, or > 95, or > 99, or up to 100 wt.%, based on total weight of the removable residue present on the surface before cleaning.

### (Surfaces)

The cleaning medium can be applied to remove the residue from hard and soft surfaces, such as tiles, floor materials, glass, plastics, wood, metals, metal alloys, ceramic, epoxy, stone, veneer, laminates, etc.; building materials (e.g., doors, door knobs, walls, stairs etc.), facilities (e.g., building, offices, etc.), fabrics (e.g., clothing, curtains, drapes, etc.); furniture (e.g., chairs, seats, trays, etc.); interior transportation surfaces (e.g., in cars, trucks, aero plane, trains, etc.), electronics, medical devices; laboratory equipment; kitchens and restaurants; hotel rooms; humidifiers / dehumidifiers / air conditioners / air filtering equipment; and appliances, etc.

### (Examples)

The following examples are intended to be non-limiting.

The components used in the examples include:
Sulfonated polymers SSBC-1 and SSBC-2: Sulfonated penta block copolymers of the structure poly[tert-butylstyrene-b-(ethylene-alt-propylene)-b-(styrene-co-styrene-sulfonate)-b-(ethylene-alt-propylene)-tert-butylstyrene] (tBS-EP-sPS-EP-tBS) from Kraton Corporation is used for deposition of the coating on the surface. The SSBCs used are described in table 1.

Noryl^{™} SA120 is a polyphenylene ether from SABIC.

FORMPOLY^{®} PP630 is polypropylene from Formulated Polymers.

SBC is a linear styrenic block copolymer (SBS) from Kraton Corporation based on styrene and butadiene, with a polystyrene content of 24 wt.%.

**Table 1. SSBC-1 and SSBC-2 for deposition of the coating.**

| Polymer | IEC (meg/g) | Degree of sulfonation (mol%) | Mₚ (kg/mol) |
|---|---|---|---|
| SSBC-1 | 1.0 | 26 | 78 |
| SSBC-2 | 2.0 | 52 | 78 |

### (Example 1)

Film samples were prepared by casting the sulfonated polymers out of 1:1 mixture of toluene and 1-propanol with 1 µm thickness on glass slide. Film samples are left for drying / solvent evaporation at 50°C for 24 hours in an oven. After drying, samples are exposed to environmental conditions, outdoor and indoor, for 4 weeks for killing microbes coming in contact with the coating containing the sulfonated polymer.

After 4 weeks, the residue remained on the glass surface was removed by using the cleaning medium. 10 ml of the solvent system was applied to a cotton rag and contacted with the glass surface containing the residue. The cleaning medium is allowed to be in contact with the surface for 30 sec. The content on the surface was wiped out by using small squeegee. Tables 2 and 3 show the solvent system having the mixture of solvents used for removing the residue from the surface.

**Table 2. Mixture of solvents for removal of the residue.**

| Solvent Mixtures | Solvent-I | Solvent-II | Ratio of solvent-I:solvent-II |
|---|---|---|---|
| SolMix-1a | 1-Butanol | Heptane | 03:01 |
| SolMix-1b | 2-Propanol | Ethyl ether | 02:01 |
| SolMix-1c | 2-Propanol | Heptane | 02:01 |
| SolMix-1d | 2-Propanol | tert-Butvl methyl ether | 02:01 |
| SolMix-1e | Ethyl acetate | Heptane | 03:01 |
| SolMix-1f | Acetone | tert-Butyl methyl ether | 03:01 |
| SolMix-1h | Acetone | Heptane | 03:01 |
| SolMix-1i | Butvl acetate | Ethvl ether | 03:01 |
| SolMix-1j | 1-Propanol | Heptane | 03:01 |
| SolMix-1k | 2-Propanol | Heptane | 03:01 |

**Table 3. Mixture of solvents and corresponding solubility parameters**

| Solvent Mixtures | Acetone (Wt.%) | Isopropanol (Wt.%) | Heptane (Wt.%) | δ_{D} | δ_{P} | δ_{H} | δ_{T} |
|---|---|---|---|---|---|---|---|
| SolMix-2a | 39 | 25 | 36 | 15.50 | 5.56 | 6.76 | 17.80 |
| SolMix-2b | 20 | 30 | 50 | 15.49 | 3.89 | 6.30 | 17.17 |
| SolMix-2c | 38 | 25 | 37 | 15.50 | 5.44 | 6.73 | 17.75 |
| SolMix-2d | 20 | 30 | 50 | 15.49 | 3.93 | 6.33 | 17.19 |
| SolMix-2e | 20 | 20 | 60 | 15.44 | 3.28 | 4.64 | 16.45 |
| SolMix-2f | 20 | 40 | 40 | 15.54 | 4.53 | 7.92 | 18.02 |
| SolMix-2h | 10 | 10 | 80 | 15.37 | 1.65 | 2.34 | 15.63 |
| SolMix-2i | 15 | 15 | 70 | 15.41 | 2.48 | 3.51 | 16.00 |
| SolMix-2i | - | 40 | 60 | 15.50 | 2.44 | 6.56 | 17.01 |
| SolMix-2k | 40 | - | 60 | 15.38 | 4.16 | 2.80 | 16.18 |

### (Example 2)

Film samples of SSBC-2 and other polymers (blends) were prepared by repeating procedure of example 1. Table 4 provides details of blends and mechanical properties for comparative example and blends. Mechanical properties, including toughness, elongation at break, tensile strength, and Young's modulus are measured according to ASTM D412.

**Table 4. Mechanical properties of blends of sulfonated polymer and other polymers.**

| Example | SSBC-2 (wt.%) | Other polymer (Wt.%) | Toughness, MJ/m³ | Elongation at break, % | Tensile strength, MPa | Young's Modulus, MPa |
|---|---|---|---|---|---|---|
| Example-2AL | 100 | | 2.14 | 22.0 | 13.85 | 290.3 |
| Example-2a | 98 | SA120 - (2) | 1.67 | 19.4 | 13.69 | 382.99 |
| Example-2b | 95 | SA120 - (5) | 1.05 | 14.2 | 11.26 | 375.57 |
| Example-2c | 98 | PP630 - (2) | 1.83 | 23.9 | 11.35 | 309.68 |
| Example-2d | 95 | PP630 - (5) | 1.20 | 11.7 | 14.87 | 335.57 |
| Example-2e | 98 | PS - (2) | 2.61 | 28.2 | 13.13 | 351.42 |
| Example-2f | 98 | tBS - (2) | 3.49 | 45.7 | 8.70 | 428.44 |
| Example-2g | 98 | SBC - (2) | 1.36 | 26.7 | 6.22 | 322.76 |

| | | | | | | |
|---|---|---|---|---|---|---|
| tBS: poly(tert-butyl styrene) and PS: polystyrene | | | | | | |

As used herein, the term "comprising" means including elements or steps that are identified following that term, but any such elements or steps are not exhaustive, and an embodiment can include other elements or steps. Although the terms "comprising" and "including" have been used herein to describe various aspects, the terms "consisting essentially of" and "consisting of" can be used in place of "comprising" and "including" to provide for more specific aspects of the disclosure and are also disclosed.

## Claims

1. A method to remove a residue from a surface, the method comprising:
applying a cleaning medium to the surface containing the residue,
wherein
the cleaning medium comprises up to 100 wt.% of at least a solvent selected from the group consisting of organic solvents, inorganic solvents, terpene based compounds, decarboxylated rosin acids (DCRs), and mixtures thereof, based on total weight of the cleaning medium,
the residue contains a sulfonated polymer having an ion exchange capacity (IEC) of greater than 0.5 meq/g, and
the residue is a coating resulting from deposition of the sulfonated polymer to provide antimicrobial protection to the surface;
allowing the cleaning medium to be in contact with the residue for at least 5 seconds to swell and / or dissolve the residue to remove the residue from the surface; and
removing at least 50 wt.% of the residue and the cleaning medium from the surface by wiping the surface with a shear force.

2. The method of claim 1, wherein the sulfonated polymer is sufficiently sulfonated for a reduction in a microbe concentration by at least 1 log₁₀ CFU (colony forming units) within 120 min upon contact with the coating after being first deposited onto the surface.

3. The method of claim 2, wherein the sulfonated polymer is sufficiently sulfonated to have least 10 mol% of sulfonic acid or sulfonate ester functional groups based on total mol of monomer units or polymer blocks to be sulfonated in the sulfonated polymer.

4. The method of any of claims 1-3, wherein the sulfonated polymer has a degree of sulfonation of 10 to 100 mol% and an ion exchange capacity (IEC) of 0.5 to 2.6 meq/g.

5. The method of any of claims 1-4, wherein the sulfonated polymer is a sulfonated styrenic block copolymer obtained by sulfonation of a styrenic block copolymer precursor having a general configuration of A-B-A, (A-B)ₙ(A), (A-B-A)ₙ, (A-B-A)ₙX, (A-B)ₙX, A-D-B, A-B-D, A-D-B-D-A, A-B-D-B-A, (A-D-B)nA, (A-B-D)ₙA (A-D-B)ₙX, (A-B-D)ₙX, (A-D-B-D-A)ₙX, (A-B-D-B-A)ₙX or mixtures thereof, where n is an integer from 2 to 30, and X is a residue of a coupling agent; and wherein:
each block A is derived from polymerized para-substituted styrene monomers selected from the group consisting of para-methylstyrene, para-ethylstyrene, para-n-propylstyrene, para-iso-propylstyrene, para-n-butylstyrene, para-sec-butylstyrene, para-isobutylstyrene, para-t-butylstyrene, isomers of para-decylstyrene, isomers of para-dodecylstyrene, and mixtures thereof;
each block B is derived from the polymerized vinyl aromatic monomers selected from the group consisting of unsubstituted styrene, ortho-substituted styrene, meta-substituted styrene, alpha-methylstyrene, 1,1-diphenylethylene, 1,2-diphenylethylene, and mixtures thereof; and
each block D is derived from the polymerized conjugated diene monomers selected from the group consisting of isoprene, 1,3-butadiene, 2,3-dimethyl-1,3-butadiene, 1-phenyl-1,3-butadiene, 1,3-pentadiene, 1,3-hexadiene, 3-butyl-1,3-octadiene, farnesene, myrcene, piperylene, cyclohexadiene, and mixtures thereof.

6. The method of any of claims 1-5, wherein the cleaning medium comprises a solvent system containing a mixture of two or more solvents, wherein each solvent independently has at least one of a) an OH group, b) an ester and / or ether group, and c) 10 or more carbon atoms, and wherein the solvent system has a total solubility parameter (*δ_{T}*) of greater than 14.5.

7. The method of any of claims 1-6, wherein the solvent has a relative polarity of 0.005 to 0.65.

8. The method of any of claims 1-7, wherein the solvent is selected from the group consisting of acetone, acetyl acetone, acetic acid, acetonitrile, benzonitrile, 2-butanone, t-butyl alcohol, benzyl alcohol, cyclohexane, cyclohexanol, cyclohexanone, dichloromethane, 1,2-dichloroethane, diethylene glycol, diethyl ether, diglyme (diethylene glycol dimethyl ether), 1,2-dimethoxy-ethane (glyme, DME), 1,4-dioxane, methanol, ethanol, methyl acetate, N-methylpyrrolidon, ethyl acetate, ethyl acetoacetate, butyl acetate, ethylene glycol, glycerin, heptane, hexamethylphosphoramide (HMPA), hexamethylphosphoroustriamide (HMPT), hexane, methyl t-butyl ether (MTBE), dimethylsulfoxide (DMSO), methyl ethyl ketone (MEK), dimethylformamide (DMF), methyl propyl ketone (MPK), dimethylphthalate, nitromethane, pentane, petroleum ether, pyridine, toluene, aniline, triethyl amine, diethylamine, o-xylene, m-xylene, p-xylene, naphtha, di-n-butylphthalate, 3-pentanone, chloroform, bis(2-methoxyethyl) ether, ethyl benzoate, tetrahydrofuran(THF), anisole, chlorobenzene, N,N-dimethylaniline, carbon disulfide, carbon tetrachloride, ethylene glycol mono hexyl ether (EGMHE), 1-undecanol, 1-pentanol, substituted and unsubstituted furans, oxetane, tert-butyl methyl ether, 2-ethyl butyl acetate, dipropylether, dibutylether, butyl lactate, N-dodecane, butanol, ethyl lactate, 1-decanol, isopropyl myristate, 1-propanol, 2-propanol, isododecane, ethyl acetate, decanal, ethyl glycol acetate, 2-ethyl hexanoic acid, neopentyl glycol, and mixtures thereof.

9. The method of any of claims 1-8, wherein at least 50 wt.% or preferably 75 wt.%, or preferably 90 wt.% of the residue and the cleaning medium are removed from the surface by using a wipe to wipe the surface, and wherein the wipe is any of a towelette, an absorbent sheet, fabric, a sponge, or paper.

10. The method of any of claims 1-9, wherein the cleaning medium is any of a liquid, gel, or foam.

11. The method of any of claims 1-10, wherein applying the cleaning medium to the surface is by any of spraying, brushing, dipping, wiping, sprinkling, or pouring the cleaning medium onto the surface to cover at least 90% of the residue to be removed.

12. The method of any of claims 1-11, wherein applying a cleaning medium to the surface comprises:
providing a wipe, wherein the wipe is any of a towelette, an absorbent sheet, fabric, a sponge, or a paper;
impregnating the wipe with the cleaning medium by any of spraying, brushing, sprinkling, pouring the cleaning medium onto the wipe, or dipping the wipe into the cleaning medium to obtain a wet wipe; and
placing the wet wipe onto the surface containing the residue for removal.

13. The method of any of claims 1-12, wherein the cleaning medium further comprises at least an additive selected from the group consisting of propellant, stabilizers, surfactant, detackifying agent, natural oil, in amounts of 1 to 10 wt.%, based on total weight of the cleaning medium.

14. The method any of claims 1-13, wherein the reside is a coating having a thickness of greater than 0.2 µm.

15. The method any of claims 1-14, wherein the cleaning medium is allowed to be in contact with the residue for period of 5 sec to 30 min.
